(19) Europäisches Patentamt
European Patent Office
Office européen des brevets

(11) Veröffentlichungsnummer: **0 068 522**
**B1**

(12) # EUROPÄISCHE PATENTSCHRIFT

(45) Veröffentlichungstag der Patentschrift: **24.10.84**

(51) Int. Cl.³: **C 01 B 13/10**, C 25 B 1/00

(21) Anmeldenummer: **82200493.3**

(22) Anmeldetag: **26.04.82**

(54) **Verfahren und Vorrichtung zur synthetischen Herstellung von Ozon durch Elektrolyse und deren Verwendung.**

(30) Priorität: **11.05.81 CH 3023/81**

(43) Veröffentlichungstag der Anmeldung: **05.01.83 Patentblatt 83/1**

(45) Bekanntmachung des Hinweises auf die Patenterteilung: **24.10.84 Patentblatt 84/43**

(84) Benannte Vertragsstaaten: **CH DE FR GB IT LI**

(56) Entgegenhaltungen:
**US - A - 3 256 164**
**US - A - 3 607 709**
**US - A - 3 838 290**
**US - A - 4 224 129**

**EXTENDED ABSTRACTS, Band 80-2, Nr. 628, 1980, Pennington N.J. (US) P.C. FOLLER et al.: "The generation of ozone by the anodic oxidation of water", Seiten 1567-1568**
**CHEMICAL ABSTRACTS, Band 92, 1980, Seite 478, Zusammenfassung Nr. 101404q, Columbus, Ohio (US) H.P. FRITZ et al.: "Electrochemical syntheses. XVII. Ozone synthesis by electrolysis of water"**
**CHEMICAL ABSTRACTS, Band 83, 1975, Seite 520, Zusammenfassung Nr. 105409g, Columbus, Ohio (US) D.P. SEMCHENKO et al.: "Formation of ozone on lead**

(73) Patentinhaber: **BBC Aktiengesellschaft Brown, Boveri & Cie., Haselstrasse, CH-5401 Baden (CH)**

(72) Erfinder: **Menth, Anton, Dr. phys., Hombergsteig 5, CH-5415 Nussbaumen (CH)**
Erfinder: **Stucki, Samuel, Dr. Chem., Dynamostrasse 1, CH-5400 Baden (CH)**

(56) Entgegenhaltungen: (Fortsetzung)
**dioxide during electrolysis of perchloric acid"**
**CHEMICAL ABSTRACTS, Band 80, 1974, Seite 452, Zusammenfassung Nr. 66110u, Columbus, Ohio (US) D. SEMCHENKO et al.: "Electrolytic production of ozone"**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

EP 0 068 522 B1

## Beschreibung

Die Erfindung geht aus von einem Verfahren zur Herstellung von Ozon nach der Gattung des Anspruchs 1 und einer Vorrichtung nach der Gattung des Anspruchs 4 sowie deren Anwendung nach der Gattung der Ansprüche 6 bis 9.

Ozon wird in technischem Massstab in der Regel durch stille elektrische Entladung in Luft oder Sauerstoff erzeugt (z.B. Siemens-Ozonisator). Es ist ausserdem in elektrochemischen Zellen mit Anoden hoher Überspannung (Pt, $PbO_2$) beobachtet worden, dass neben der Sauerstoffentwicklung noch Ozon als Nebenprodukt auftrat (z.B. H.P. Fritz, J.C.G. Thanos, D.W. Wabner, „Ozone Synthesis by Electrolysis of Water", „Z. Naturforsch.", 34b, S. 1617 bis 1627 [1979]). Es ist bekannt, dass die Stromausbeute und somit der prozentuale Anteil an Ozon in anodische am $PbO_2$ freigesetzten Sauerstoff durch Verwendung fluorhaltiger Anionen im Elektrolyt wesentlich erhöht werden kann, womit dieses Verfahren energetisch mit dem Siemens-Ozonisator in Wettbewerb treten kann (z.B. P.C. Foller, C.W. Tobias, „Ext. Abstract No. 628", „The generation of ozone by the anodicoxidation of Water", Electrochem. Soc. Fall Meeting 1980, Hollywood, Florida, S. 1567 bis 1568). Danach wären Stromausbeuten von 50 % und Wirkungsgrade von 5 bis 10 % zu erwarten.

Das letztere Verfahren zeichnet sich durch die Giftigkeit des Elektrolyten aus, was bedingt, dass für eine saubere Trennung zwischen Elektrolyt und anfallendem Gasgemisch Sorge getragen werden muss. Ausserdem muss die elektrolytische Ozonerzeugung aus Gründen des chemisch-thermodynamischen Gleichgewichtes bei möglichst tiefen Temperaturen erfolgen, was umfangreiche Kühleinrichtungen erfordert. Es besteht daher ein starkes Bedürfnis nach Verbesserung und Vereinfachung der Prozesse und Vorrichtungen.

Der Erfindung liegt die Aufgabe zugrunde, ein Verfahren und eine Vorrichtung zur Ozonsynthese mittels Elektrolyse anzugeben, welche unter Vermeidung eines chemisch aggressiven Elektrolyten eine einfache Prozessführung sowie eine zuverlässige Wärmeabfuhr ohne aufwendige Kühleinrichtungen gewährleisten.

Diese Aufgabe wird erfindungsgemäss durch die Merkmale der Ansprüche 1 und 4 gelöst.

Die Erfindung wird anhand des nachfolgenden, durch Figuren erläuterten Ausführungsbeispiels beschrieben.

Dabei zeigt

Fig. 1 einen schematischen Schnitt durch einen Ausschnitt einer Ozonelektrolysezelle,

Fig. 2 einen schematischen Schnitt durch eine aus mehreren Elektrolysezellen bestehende Vorrichtung zur Ozonherstellung, und

Fig. 3 eine schematische Darstellung der zur Durchführung des Verfahrens erforderlichen Apparatur.

In Fig. 1 ist ein Ausschnitt einer Ozonelektrolysezelle schematisch im Schnitt dargestellt. 1 ist ein Feststoffelektrolyt (Kunststoffpolymer, z.B. auf der Basis perfluorierter Sulfosäuren) in der Form einer dünnen Ionenaustauschermembran. Letztere ist mit einer Oberflächenbeschichtung 2 auf der Kathodenseite sowie einer Beschichtung 3 auf der Anodenseite versehen. Für die Beschichtungen 2 und 3 werden vorzugsweise Platinmetalle (Kathodenseite) und $PbO_2$ (Anodenseite) verwendet. Auf beiden Seiten des beschichteten Feststoffelektrolyten 1 befinden sich Stromkollektoren 4, welche für eine gute Stromverteilung über die gesamte Fläche der Membran sorgen. Diese können aus feinem Drahtgewebe, engmaschigem feinem Streckmetall oder einem dünnen perforierten Blech bestehen. 5 ist eine offene Struktur bestehend aus einem Streckmetall oder Drahtgewebe mit vergleichsweise geringem Strömungswiderstand für eine Flüssigkeit in der Richtung parallel zur Hauptsymmetrieebene des flächenhaften Gebildes. Sowohl 4 wie 5 müssen aus korrosionsbeständigem Material, vorzugsweise aus Titan oder einer Titanlegierung, bestehen. Der Abschluss der Zelle bildet je eine abwechslungsweise als Kathode bzw. Anode wirkende bipolare Platte 6, in der Einzelzelle mit − und + angedeutet. Letztere besteht vorzugsweise aus nichtrostendem (Cr/Ni-) Stahl. Der Raum zwischen den bipolaren Platten 6 und dem Feststoffelektrolyten 1 ist mit Flüssigkeit ($H_2O$, worin $O_2$ oder Luft suspendiert und/oder gelöst ist) erfüllt. Die Strömungsrichtung ist durch Pfeile angedeutet (von unten nach oben, kann jedoch auch horizontal erfolgen).

Fig. 2 zeigt einen schematischen Schnitt durch eine aus mehreren Elektrolysezellen bestehende Vorrichtung zur Herstellung von Ozon. Die Bezugszeichen 1, 5 und 6 stellen die gleichen Bauelemente dar, wie in Fig. 1 angegeben. Die offenen Strukturen 5 sind der Übersichtlichkeit halber nur teilweise eingezeichnet. Der Zusammenbau der Elektrolysezellen entspricht grundsätzlich dem Filterpresstyp, wobei jedoch die Flüssigkeit parallel zu den Hauptebenen der Zellen geführt wird statt senkrecht dazu. Die Einzelzellen werden durch nicht eingezeichnete Spannelemente (Bolzen, Schrauben, Zangen, Muttern) zwischen den beiden Endplatten 7 zusammengehalten, wobei letztere mit Klammern 8 (−) und 9 (+) zwecks Stromanschluss verbunden sind. 10 ist ein Verteilkasten mit Zuflussrohr und 11 ein Sammelkasten mit Abflussrohr. Die Kästen 10 und 11 sind ringsum über je einen gleichzeitig als Dichtung dienenden Isolierrahmen 12 mit dem Zellenpaket verbunden. Die Flüssigkeit ist durch chemische Symbole, deren Strömungsrichtung durch entsprechende Pfeile (von unten nach oben) angedeutet.

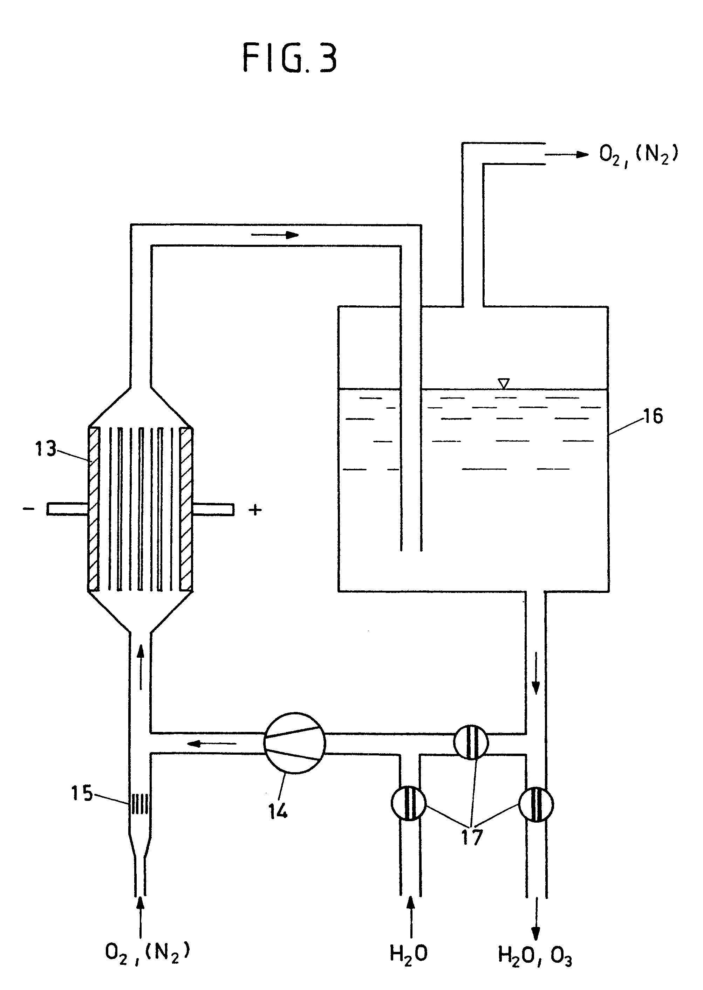

In Fig. 3 ist die gesamte zur Duchführung des Verfahrens erforderliche Apparatur schematisch dargestellt. Der Elektrolyseblock 13 ist über seine Klemmen + und − an eine Gleichstromquelle angeschlossen. Er befindet sich in dem durch Pfeile angedeuteten Flüssigkeitsstrom. 14 ist eine Pumpe, welche über einen Absperrhahn 17 Wasser fördert. Luft oder Sauerstoff wird über die Gasfritte 15 unter Druck zugeführt. Am Ausgang des Elektrolyseblocks 13 befindet sich ein Gasabscheider 16, dessen Flüssigkeitsspiegel durch ein Dreiecksymbol markiert ist. Das Wasser/Ozon-Gemisch gelangt über einen weiteren Absperrhahn 17 zum Austritt. Durch die wahlweise Stellung je eines Absperrhahns 17 können beliebige Kreisläufe verwirklicht werden.

*Wirkungsweise und Ausführungsbeispiel:*

S. Fig. 1 bis 3.

Das Prinzip besteht darin, dass Ozon in wässeriger Lösung *in situ* auf der Anodenseite des Feststoffelektrolyten 1 erzeugt wird, während auf der Kathodenseite Wasser gebildet wird. In die Zelle wird sowohl auf der Anoden- wie der Kathodenseite (Oberflächenbeschichtungen 3 bzw. 2) Wasser, welches mit Sauerstoff ($O_2$) oder einem sauerstoffhaltigen Gas, z.B. Luft ($O_2$, $N_2$) gesättigt ist, eingeleitet und längs der Oberfläche des Feststoffelektrolyten 1 entlang strömen gelassen. Der Feststoffelektrolyt 1 ist mit pulverförmigen Elektrodenmaterialien beschichtet, z.B. $PbO_2$ als Beschichtung 3 auf der Anodenseite, Pt als Beschichtung 2 auf der Kathodenseite. Die Kontaktierung der Beschichtungen 2 und 3 erfolgt über die Stromkollektoren 4 und die offenen Strukturen 5. Das Wasser dient beim Prozess sowohl als Reaktions- wie als Kühlmittel.

Durch den Elektrolyseprozess wird das Wasser zerlegt, wobei auf der Anodenseite sowohl Sauerstoff wie Ozon gebildet wird:

$$H_2O \rightarrow 2H^+ + 2e^- + \tfrac{1}{2}O_2$$

$$H_2O \rightarrow 2H^+ + 2e^- + \tfrac{1}{2}O_3$$

Die Wasserstoffionen wandern durch den als Ionenaustauschermembran wirkenden Feststoffelektrolyten 1 hindurch auf die Kathodenseite (durch $H^+$ und Pfeil angedeutet), wo sie mit dem mit der Flüssigkeit mitgeführten Sauerstoff (hohe Sättigung des im Wasser suspendierten und/oder gelösten $O_2$ in Form von reinem oder Luftsauerstoff) dank intensiver Konvektion reagieren. Die Wasserstoffentwicklung an der Kathode wird dadurch unterdrückt (Brennstoffzellenkathode):

$$2H^+ + 2e^- + O_2 \rightarrow H_2O$$

Im Kathodenraum werden also keine schädlichen aggressiven Produkte sondern lediglich neutrales Wasser gebildet. Es kann somit auf eine getrennte Führung der Flüssigkeitsströme aus dem Anoden- und Kathodenraum verzichtet werden. Dadurch ist nur ein einziger Flüssigkeitskreislauf erforderlich.

Der Elektrolyseblock 13 bestand aus 4 elektrisch in Serie liegenden und bezüglich Flüssigkeitsstrom parallel angeordneten einzelnen Elektrolysezellen gemäss Aufbau nach Fig. 1. Die Elektrodenfläche, einseitig gemessen, betrug 100 $cm^2$. Als Feststoffelektrolyt 1 diente eine Ionenaustauschermembran auf der Basis perfluorierter Sulfosäuren von Dupont mit dem Handelsnamen Nafion 125 von 0,125 mm Dicke. Die kathodenseitige Beschichtung 2 bestand aus einer Mischung von 85 Gew.-% Aktivkohlepulver und 15 Gew.-% Platinpulver, wobei die Belegungsdichte 2 $mg/cm^2$ betrug. Die anodenseitige Beschichtung 3 bestand aus $\beta$-$PbO_2$-Pulver mit einer Belegungsdichte von 4 $mg/cm^2$. Für beide Beschichtungen 2 und 3 wurde ein Kunststoffpolymer als Binder verwendet. Als Stromkollektor 4 auf beiden Seiten des Feststoffelektrolyten 1 diente ein Drahtgewebe aus platiniertem Titan mit der Maschenweite 70 mesh (760 Maschen bzw. Löcher pro Kubikzentimeter). Die offene Struktur 5 bestand aus einem Streckmetall aus Titan, wobei die Dimension der Rauten 6 x 4 mm betrug. Als bipolare Platte 6 wurde ein 0,2 mm dickes Blech aus rostfreiem (Cr/Ni-)Stahl verwendet.

Über die Pumpe 14 wurde eine Wassermenge von 20 l/min gefördert. Gleichzeitig wurde über die Gasfritte 15 eine Luftmenge von 20 l/min eingepresst. Die Flüssigkeitstemperatur am Eingang des Elektrolyseblocks 13 betrug 12°C. Bei einer Stromdichte von 1 $A/cm^2$ ergab sich eine totale Klemmenspannung am Elektrolyseblock 13 von 12,2 V. Die Flüssigkeitstemperatur am Ausgang des Elektrolyseblocks 13 betrug 13°C. Nach 1 h Betrieb wurde der stationäre Zustand erreicht. Die Ozonkonzentration im Abfluss nach dem Gasabscheider 16 wurde jodometrisch bestimmt und ergab ca. 0,01 g/l.

Die Erfindung ist keineswegs auf das Ausführungsbeispiel beschränkt. Die bipolare Platte 6 kann grundsätzlich aus einem unter den vorliegenden Bedingungen korrosionsbeständigen Material, z.B. Stahl, insbesondere (Cr/Ni-)Stahl bestehen und eine Dicke von 0,1 bis 1 mm, je nach Grösse der Zelle, aufweisen. Die metallische Struktur 5 kann vorzugsweise auf der Anodenseite aus Titan, auf der Kathodenseite ebenfalls aus Titan oder einem geeigneten rostfreien (Cr/Ni-) Stahl bestehen und eine Dickenabmessung von 0,5 bis 5 mm aufweisen. Der Feststoffelektrolyt auf der Basis perfluorierter Sulfosäuren kann eine Dicke von 0,05 bis 0,2 mm aufweisen. Die Beschichtungen 2 (Kathodenseite) und 3 (Anodenseite) bestehen vorteilhafterweise aus Platin oder einem Platinmetall einerseits und $PbO_2$ anderseits. Letzteres kann auch durch ein anderes Material mit hoher Ozonausbeute ersetzt sein.

Der wesentliche Vorteil der Erfindung besteht darin, dass als Ausgangsmaterialien gewöhnliches Wasser und ein sauerstoffhaltiges Gas benutzt werden können, also keinerlei chemisch aggressive Anionen benötigt werden. Ferner ist eine Trennung von Anolyt und Katholyt am Ausgang der Zelle überflüssig, da keinerlei schädliche oder aggressive Nebenprodukte entstehen. Die gesamte Apparatur kommt daher mit einem einzigen Flüssigkeitskreislauf aus.

Das Verfahren kann auch bei höherem als Atmosphärendruck, d.h. bei Drücken von bis 10 MPa, betrieben werden. Da die Löslichkeit von Ozon in Wasser mit dem Druck ungefähr linear ansteigt, können auf diese Weise konzentrierte Lösungen mit hohem Ozongehalt erzeugt werden.

Das Verfahren eröffnet zahlreiche Anwendungen und kann in wirtschaftlicher Weise bevorzugt dort eingesetzt werden, wo sich Oxydationsvorgänge in wässeriger Lösung abzuspielen haben. Dies gilt insbesondere für alle Arten der Aufbereitung von Trinkwasser, Kühlwasser, Prozesswasser

und Abwasser, wobei mindestens ein Teil des aufzubereitenden Wassers direkt *in situ* mit Ozon beladen wird. Es besteht überdies die Möglichkeit, Ozonstarkwasser, d.h. Wasser mit hohem Ozongehalt, unter Druck unmittelbar in der Elektrolysezelle zu erzeugen und die konzentrierte Lösung in das aufzubereitende Wasser einzuspritzen. Die Elektrolyse kann ausserdem im Hauptstrom, in einem Teilstrom oder im Einkreisungsstrom des Flüssigkeitskreislaufes durchgeführt werden. Letzterer kann sowohl offen wie auch geschlossen sein. Das Verfahren kann als einzelner Teilschritt oder als sich mehrfach wiederholender Teilschritt in einem integrierten Aufbereitungskreislauf enthalten sein. Das entsprechende gilt für integrierte chemischphysikalische Prozesse, bei denen ein oder mehrere Oxydationsschritte erforderlich sind.

## Patentansprüche

1. Verfahren zur synthetischen Herstellung von Ozon durch Elektrolyse, dadurch gekennzeichnet, dass als Ausgangsmaterialien Wasser und ein elementaren Sauerstoff enthaltendes Gas und als Elektrolyt ein beidseitig mit leitenden Materialien beschichteter Feststoffelektrolyt (1) in Form einer dünnen Ionenaustauschermembran verwendet werden, dass ferner das an Sauerstoff gesättigte Wasser sowohl auf der Kathoden- wie auf der Anodenseite parallel der Feststoffelektrolytmembran (1) entlanggeführt wird, und dass die Stromzuführung zu den als Elektroden dienenden Beschichtungen (2, 3) des Feststoffelektrolyten (1) über je eine offene metallische Struktur (5) mit geringem Strömungswiderstand für das Wasser erfolgt und dass letzteres gleichzeitig zur Abfuhr der beim Prozess anfallenden Wärme benutzt wird.

2. Verfahren nach Anspruch 1, dadurch gekennzeichnet, dass als Ausgangsmaterialien Wasser und atmosphärische Luft und als Feststoffelektrolyt (1) eine auf der Kathodenseite (2) mit Platin und auf der Anodenseite (3) mit $PbO_2$ beschichtete Ionenaustauschermembran aus einem Polymer auf der Basis von perfluorierten Sulfosäuren verwendet werden.

3. Verfahren nach Anspruch 1, dadurch gekennzeichnet, dass der Elektrolyseprozess unter einem Druck von bis 10 MPa durchgeführt wird und dass eine unter diesem Druck stehende Lösung von Ozon in Wasser erzeugt wird.

4. Vorrichtung zur synthetischen Herstellung von Ozon bestehend aus einer Vielzahl von nach dem Filterpresseprinzip aufgebauten Elektrolysezellen, dadurch gekennzeichnet, dass die einzelne Zelle aus je 2 abwechselnd zur kathodischen und anodischen Stromleitung dienenden bipolaren Platten (6) mit dazwischen angeordneten und eine beidseitig beschichtete Ionenaustauschermembran als Feststoffelektrolyten (1) in der Mitte unter Zwischenschaltung von Stromkollektoren (4) festhaltenden offenen metallischen Strukturen (5) mit geringem Strömungswiderstand für Flüssigkeiten besteht, wobei der Hohlraum der Zelle mit an Sauerstoff gesättigtem reinen Wasser gefüllt ist.

5. Vorrichtung nach Anspruch 3, dadurch gekennzeichnet, dass die bipolare Platte (6) aus einem Stahlblech von 0,1 bis 1 mm Dicke, die metallische Struktur (5) aus Streckmetall oder Drahtgewebe aus Titan für die Anodenseite und aus rostfreiem Stahl für die Kathodenseite mit einer Dicke von 0,5 bis 5 mm, und der Feststoffelektrolyt (1) aus einem Polymer auf der Basis perfluorierter Sulfosäuren mit einer Dicke von 0,5 bis 0,2 mm besteht, und dass die Beschichtung auf der Kathodenseite (2) aus einem Platinmetall und auf der Anodenseite (3) aus $PbO_2$ besteht.

6. Anwendung des Verfahrens nach Anspruch 1 bei der Aufbereitung von Trinkwasser, Kühlwasser, Prozesswasser und Abwasser, wobei mindestens ein Teil des Wassers direkt *in situ* mit Ozon beladen wird.

7. Anwendung des Verfahrens nach Anspruch 6, dadurch gekennzeichnet, dass Ozonstarkwasser mit einem hohen Ozongehalt unter Druck erzeugt und die konzentrierte Lösung in das aufzubereitende Wasser eingespritzt wird.

8. Anwendung des Verfahrens nach einem der beiden Ansprüche 6 oder 7, dadurch gekennzeichnet, dass die Elektrolyse im Hauptstrom, in einem Teilstrom oder im Einkreisungsstrom eines vorliegenden offenen oder geschlossenen Flüssigkeitskreislaufs durchgeführt wird.

9. Anwendung des Verfahrens nach Anspruch 1 als einzelner Teilschritt oder sich mehrfach wiederholender Teilschritt in integrierten Aufbereitungskreisläufen und eine oder mehrere Oxydationsschritte erfordernden chemisch-physikalischen Prozessen.

## Claims

1. Process for the synthetic preparation of ozone by electrolysis, characterised in that water and a gas containing elementary oxygen are used as the starting materials and a solid electrolyte (1), coated on both sides with conductive materials, in the form of a thin ion-exchanger membrane is used as the electrolyte, and that, moreover, the water saturated with oxygen is passed parallel to the solid-electrolyte membrane (1) along both the cathode side and anode side, and in that current is supplied to the coatings (2, 3), serving as the electrodes, of the solid electrolyte (1) in each case *via* an open metallic structure (5) having a low flow-resistance for the water, and in that the latter is at the same time utilised for removing the heat generated during the process.

2. Process according to Claim 1, characterised in that water and atmospheric air are used as the starting materials and an ion-exchanger membrane, consisting of a polymer based on perfluorinated sulphonic acids and coated with platinum on the cathode side (2) and with $PbO_2$ on the anode side (3), is used as the solid electrolyte (1).

3. Process according to Claim 1, characterised in that the electrolysis process is carried out under a pressure of up to 10 MPa and in that a solution of ozone in water is produced under this pressure.

4. Equipment for the synthetic preparation of ozone, comprising a plurality of electrolytic cells constructed in accordance with the principe of a filter-press, characterised in that each individual cell consists of two bipolar plates (6), alternately serving for cathodic and anodic current conduction, and of open metallic structures (5) which are arranged in between and retain in the middle, with the interposition of current collectors (4), an ion-exchanger membrane, coated on both sides, as the solid electrolyte (1), and have a low flow-resistance for liquids, the cavity of the cell being filled with pure water saturated with oxygen.

5. Equipment according to Claim 4, characterised in that the bipolar plate (6) consists of 0.1 to 1 mm thick steel sheet, the metallic structure (5) consists of expanded metal or wire mesh of titanium for the anode side and of 0.5 to 5 mm thick stainless steel for the cathode side, and the solid electrolyte (1) consists of a 0.05 to 0.2 mm thick polymer based on perfluorinated sulphonic acids, and in that the coating consists of a platinum metal on the cathode side (2) and of $PbO_2$ on the anode side (3).

6. Use of the process according to Claim 1 in the treatment of drinking water, cooling water, process water and waste water, at least a part of the water being charged with ozone directly *in situ*.

7. Use of the process according to Claim 6, characterised in that high-ozone water with a high ozone content is produced under pressure and the concentrated solution is injected into the water to be treated.

8. Use of the process according to one of Claims 6 or 7, characterised in that the electrolysis is carried out in the main stream, in a part stream or in the make-up stream of an existing open or closed liquid circulation.

9. Use of the process according to Claim 1 as an individual part step or as part step repeated several times in integrated treatment circulations and in chemico-physical processes which require one or more oxidation steps.

## Revendications

1. Procédé pour la production synthétique d'ozone par électrolyse, caractérisé en ce que, comme matières de départ, on utilise de l'eau et un gaz contenant de l'oxygène élémentaire tandis que, comme électrolyte, on utilise un électrolyte en matière solide (1) enduit sur les deux faces de matières conductrices et sous la forme d'une mince membrane échangeuse d'ions; en outre, on laisse s'écouler l'eau saturée d'oxygène aussi bien sur le côté cathodique que sur le côté anodique, parallèlement à la membrane d'électrolyte en matière solide (1), tandis que l'alimentation de courant aux enduits (2, 3) de l'électrolyte en matière solide (1), qui font office d'électrodes, a lieu chaque fois à l'intervention d'une structure métallique ouverte (5) offrant une faible résistance à l'écoulement de l'eau, cette dernière étant en même temps utilisée pour dissiper la chaleur dégagée lors du processus.

2. Procédé suivant la revendication 1, caractérisé en ce que, comme matières de départ, on utilise l'eau et l'air atmosphérique tandis que, comme électrolyte en matière solide (1), on utilise une membrane échangeuse d'ions constituée d'un polymère à base de sulfoacides perfluorés, cette membrane étant enduite de platine sur le côté cathodique (2) et de $PbO_2$ sur le côté anodique (3).

3. Procédé suivant la revendication 1, caractérisé en ce que le processus d'électrolyse est effectué sous une pression allant jusqu'à 10 MPa, tandis que l'on produit une solution d'ozone dans l'eau subissant cette pression.

4. Dispositif pour la production synthétique d'ozone, ce dispositif étant constitué de plusieurs cellules d'électrolyse réalisées selon le principe du filtre-presse, caractérisé en ce que chaque cellule individuelle est consitutée de deux plaques bipolaires (6) servant alternativement à la conduction cathodique et anodique de courant et entre lesquelles sont disposées des structures métalliques ouvertes (5) offrant une faible résistance à l'écoulement des liquides et maintenant fermement, en leur centre, une membrane échangeuse d'ions enduite sur les deux faces comme électrolyte en matière solide (1), tout en intercalant des collecteurs de courant (4), l'espace creux de la cellule étant rempli d'eau pure saturée d'oxygène.

5. Dispositif suivant la revendication 3, caractérisé en ce que la plaque bipolaire (6) est constituée d'une tôle d'acier d'une épaisseur de 0,1 à 1 mm, la structure métallique (5) est constituée de métal déployé ou de tissu métallique en titane pour le côté anodique et en acier inoxydable pour le côté cathodique, en une épaisseur de 0,5 à 5 mm, l'électrolyte en matière solide (1) est constitué d'un polymère à base de sulfoacides perfluorés en une épaisseur de 0,05 à 0,2 mm, tandis que l'enduit appliqué sur le côté cathodique (2) est constitué d'un métal du groupe du platine et que l'enduit appliqué sur le côté anodique (3) est constitué de $PbO_2$.

6. Application du procédé suivant la revendication 1 lors du traitement de l'eau potable, de l'eau de refroidissement, de l'eau de processus et des eaux résiduaires, au moins une partie de l'eau étant chargée d'ozone directement *in situ*.

7. Application du procédé suivant la revendication 6, caractérisée en ce qu'on produit de l'eau riche en ozone ayant une forte teneur en ozone sous pression et l'on injecte la solution concentrée dans l'eau à traiter.

8. Application du procédé suivant l'une des revendications 6 ou 7, caractérisée en ce qu'on effectue l'électrolyse dans un courant principal, dans un courant partiel ou dans un courant d'encerclement d'un circuit de liquide ouvert ou fermé existant.

9. Application du procédé suivant la revendication 1 comme étape partielle individuelle ou comme étape partielle se répétant plusieurs fois dans des circuits de traitement intégrés ou des processus chimico-physiques nécessitant une ou plusieurs étapes d'oxydation.

FIG. 1

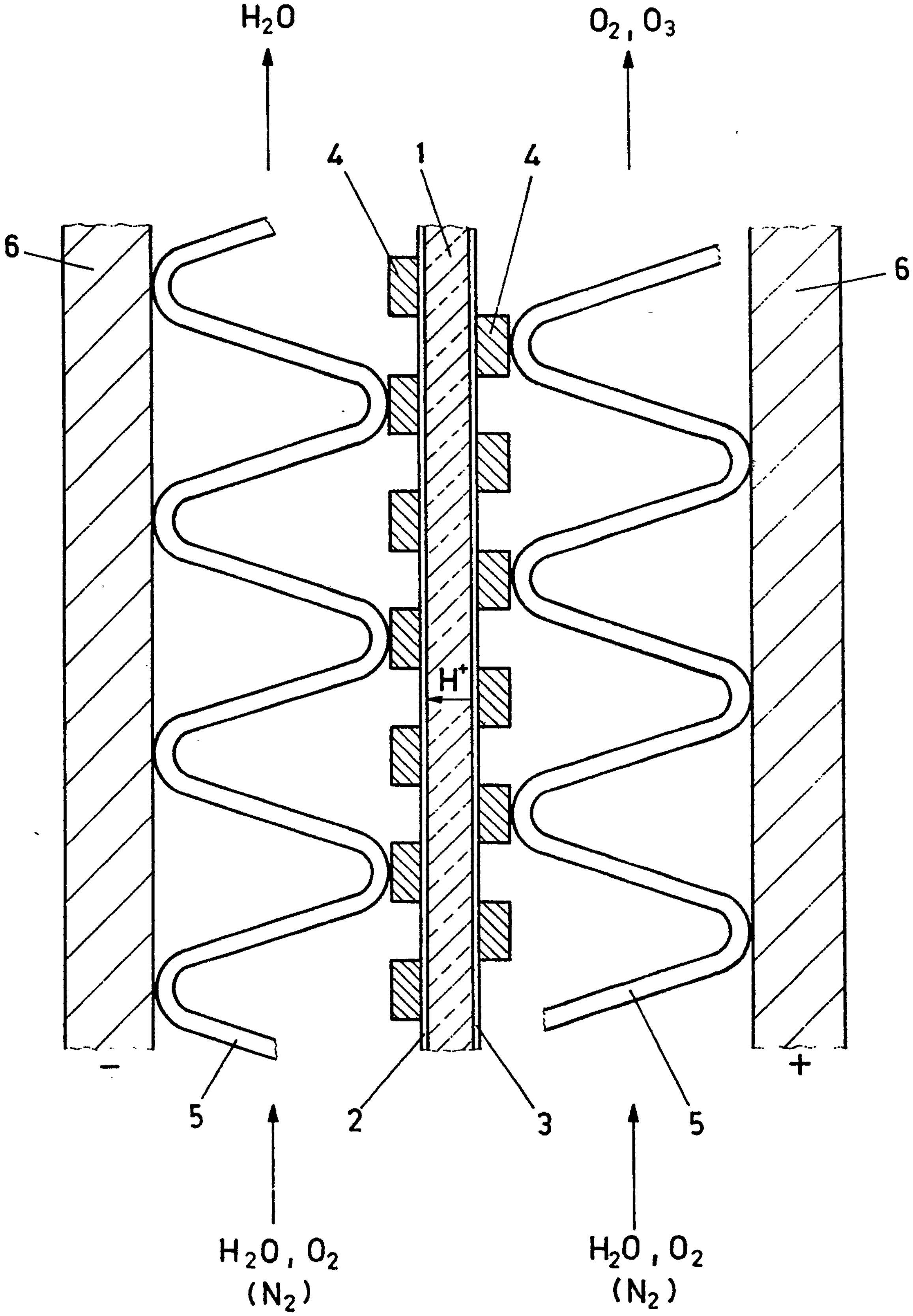

FIG. 2

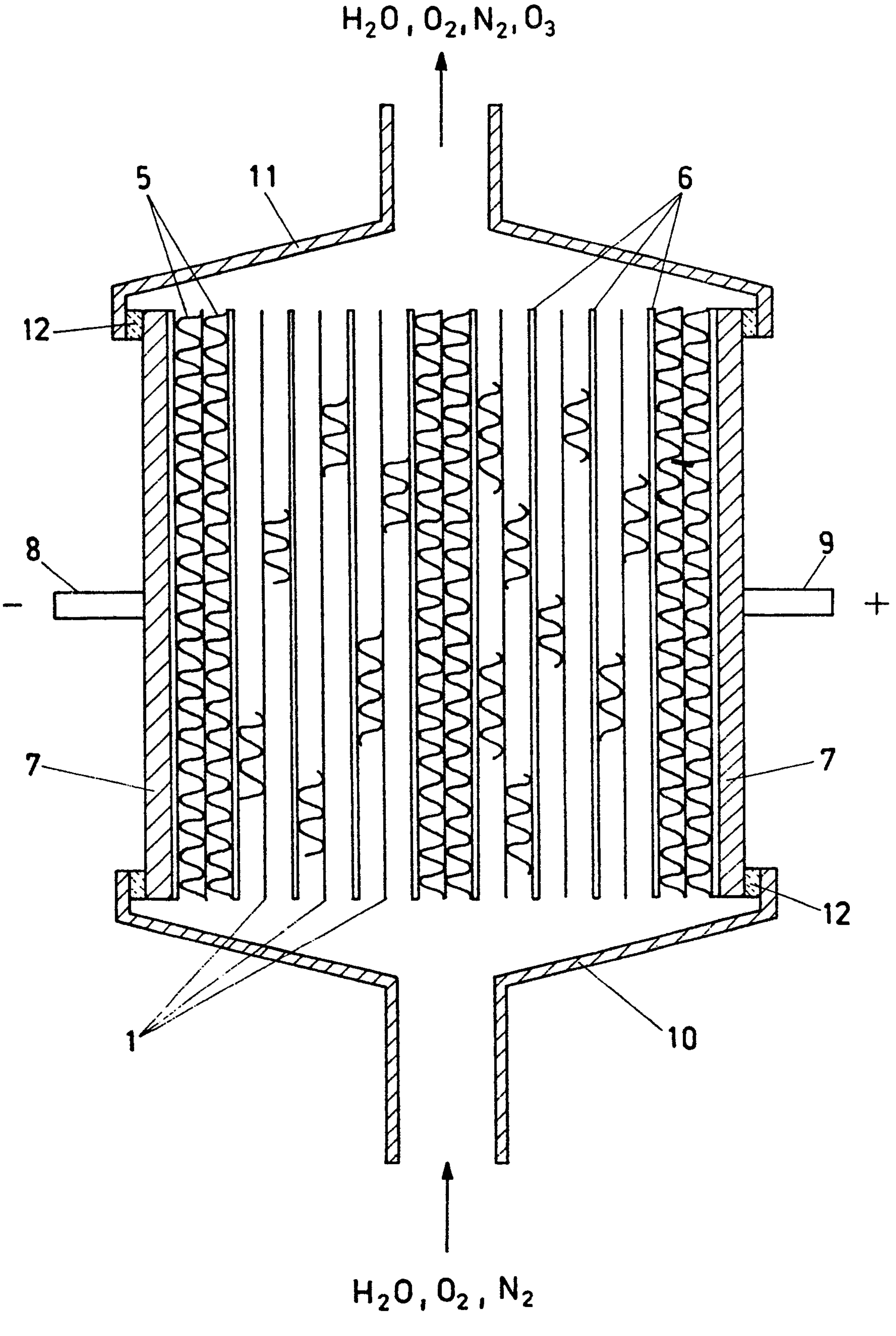

FIG. 3